# EUROPEAN PATENT SPECIFICATION

(11) **EP 0 907 754 B1**
(45) Date of publication and mention of the grant of the patent: **06.08.2003**
(21) Application number: 97925938.9
(22) Date of filing: 23.05.1997
(51) Int. Cl.: C14B 17/06, B65G 47/61, B65H 29/38

(54) **A SYSTEM FOR HANDLING OF SUBSTANTIALLY FLAT AND FLEXIBLE ITEMS, PARTICULARLY SKIN ELEMENTS**
SYSTEM ZUR HANDHABUNG VON IM WESENTLICHEN FLÄCHIGEN UND BIEGSAMEN GEGENSTÄNDEN, INSBESONDERE HAUTELEMENTEN
SYSTEME DE MANUTENTION D'ARTICLES SENSIBLEMENT PLATS ET SOUPLES, NOTAMMENT DES PEAUX

(30) Priority: 31.05.1996 IT MO960072
(43) Date of publication of application: 14.04.1999
(73) Proprietor: Cos-Met Di Compagni Nunzio, 41043 Formigine (IT)
(72) Inventor: COMPAGNI, Nunzio, F-41040 Formigine (IT)
(74) Representative: Luppi, Luigi
(86) International application number: EP9702643
(87) International publication number: WO97048630

(56) References cited:
- DE-A- 1 660 096
- DE-U- 1 925 488
- GB-A- 711 217
- GB-A- 953 609
- GB-A- 979 151
- GB-A- 2 053 123
- US-A- 4 550 905
- US-A- 5 067 620

## Description

The present invention concerns an apparatus and method for handling substantially flat items, particularly skins.

Skins of animals have to be loaded on and dicharged from transferring means on which are hung for transfer from one manufacturing station to a subsequent manufacturing station during the manufaturing process.

The transferring means are generally comprised of suspended guide means fixed to the ceiling and internally accomodating a transferring chain downwardly supporting a plurality of substantially horizontally extending rods on which skin elements are hung. Each rod has a C-shaped bent axis defining a lower rod portion which serves as support member for a respective skin elements.

Loading and downloading of the skin elements on and from the rods at each of the various stations is performed manually. Therefore the manufature is very slow and many workers may be required for completing the manufaturing process.

US 4550905 discloses an apparatus and a method for transferring semiautomatically skin elements from a transport conveyor to a second faster moving transport conveyor. Mechanical hands are provided for laterally gripping the skin elements and drawing the skin elements down from the transport conveyor to the second faster moving transport conveyor. US 5067620 discloses a product support apparatus for supporting products comprising hangers which may be attached to, and released from, support rod members.

An object of the invention is to improve the handling of the skin elements by substantially reducing the need for manual operations during the manufaturing process.

According to a first aspect of the invention, there is provided an apparatus for handling of substantially flat and flexible items, particularly skin elements, comprising overhead transferring means for supporting and transferring the items, characterized in that, under said transferring means conveyor: means for said items is provided for, said conveyor means cooperating with vertically movable displacing means for displacing said items between said transferring means and said conveyor means.

According to a second aspect of the present invention, there is provided a method for handling of substantially flat and flexible items, particularly skin elements, comprising removing said items from, or delivering said items to, overhead transferring means for supporting and transferring the items, characterized in that, said removing and/or said delivering is performed by vertically movable displacing means movable from said transferring means to downwardly extending conveyor means and vice versa.

Owing to the invention, manual operation of the skin elements is avoided and quicker processing of the skin elements is achieved.

According to a third aspect of the present invention, there is provided transferring means for transferring of substantially flat and flexible items, comprising frame means extending downwardly from respective guide means, characterized in that said frame means includes rod means provided at both ends with respective hook support members accomodating in a removable manner arm means.

Owing particularly to this aspect of the invention, even large skin parts can be handled very easily and efficiently.

The invention will be better understood and carried into practice with reference to the drawings attached, in which some embodiments of the invention are shown, purely by way of example.
- Figure 1: is a side view of an apparatus for transferring skins;
- Figure 2: is a section taken along line II-II of Figure 1;
- Figure 3: is a section as in Figure 2, but showing an alternative embodiment of the conveyor means for conveying skin elements;
- Figure 4: is a schematic front view of a vertically extending frame, having the shape of a tower, supporting arm means for handling the skin elements;
- Figure 6: is a side view of hanging means supporting the skin elements;
- Figures 7 to 10: show an operative sequence for loading a skin element from the arm means to the hanging means, in the embodiments of Figures 1 to 6;
- Figure 10: is a side view as in Figure 1, but showing an alternative embodiment of the apparatus;
- Figure 11: is a section taken along line XI-XI of Figure 10;
- Figure 12: is a schematic front view of Figure 11;
- Figure 13: is an enlarged detail of the hanging means for supporting the skin elements of Figure 12;
- Figure 14: is a section taken along line XIV-XIV of Figure 13;
- Figure 15: is a section taken along line XV-XV of Figure 14;
- Figure 16: is a side view as in Figure 1, but showing a further embodiment of the apparatus for handling skin elements;
- Figure 17: is a section taken along line XIV-XIV of Figure 16;
- Figure 18: is a view as in Figure 1, but showing still a further embodiment of the apparatus, particularly suitable for large sized skin elements;
- Figure 19: is a section taken along line XIX-XIX of Figure 18;
- Figure 20: is an enlarged detail of the hanging means shown in Figure 19;
- Figures 21 to 28: show an operative sequence for discharging a skin element from the. hanging means to the conveyor means;
- Figure 29: is a view as in Figure 18, but showing a further embodiment of the apparatus;
- Figure 30: is an interrupted enlarged detail showing divarivcating means for divaricating a pair of supporting rod;
- Figure 31: is a section taken along line XXXI-XXXI of Figure 30;
- Figure 32: is an enlarged detail of hanging means of Figure 31 in a closed condition;

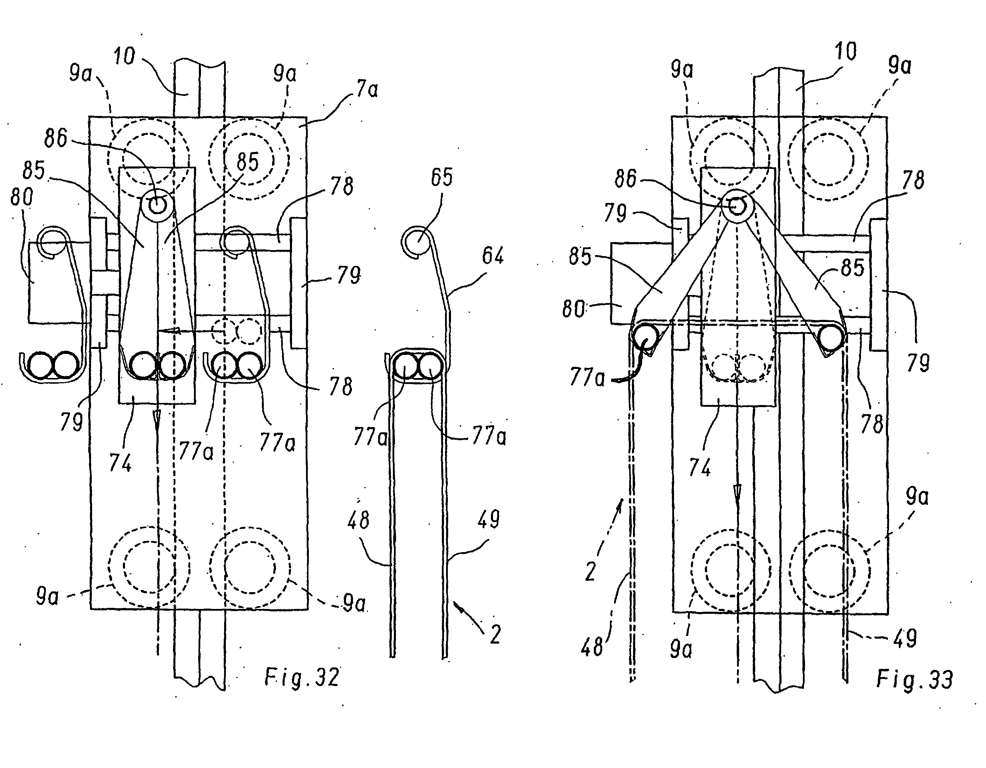

- Figure 32: is an enlarged detail as in Figure 31, but in an open position;

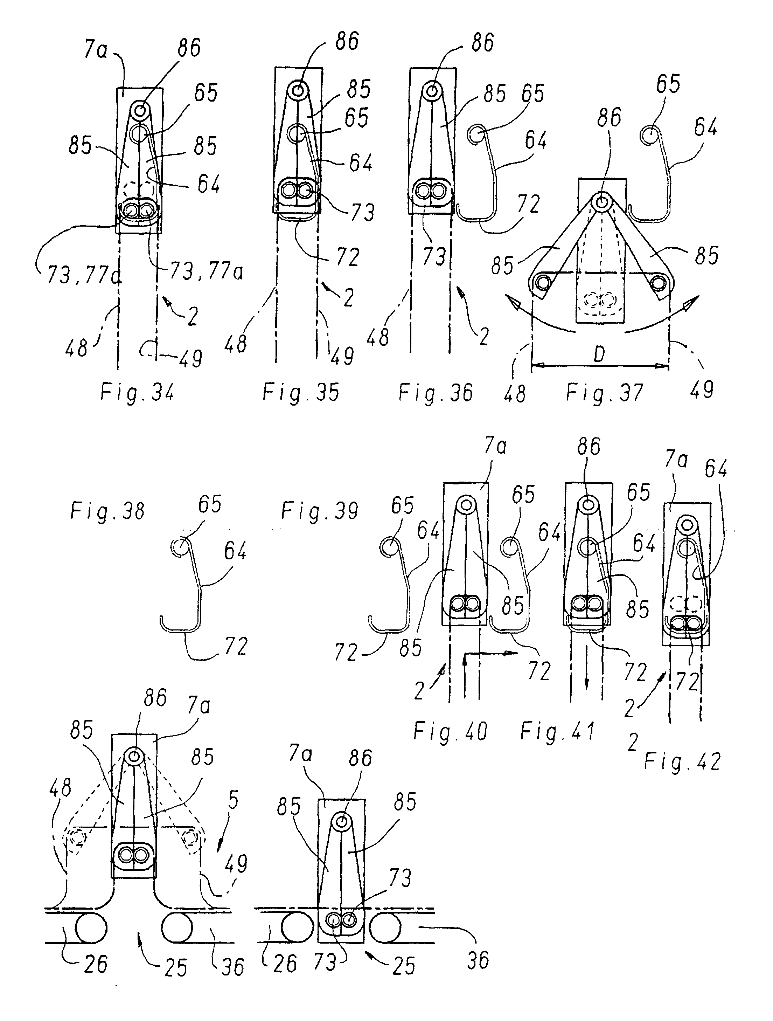

- Figures 34 to 42: show an operative sequence for discharging a skin element from the hanging means to the conveyor means;

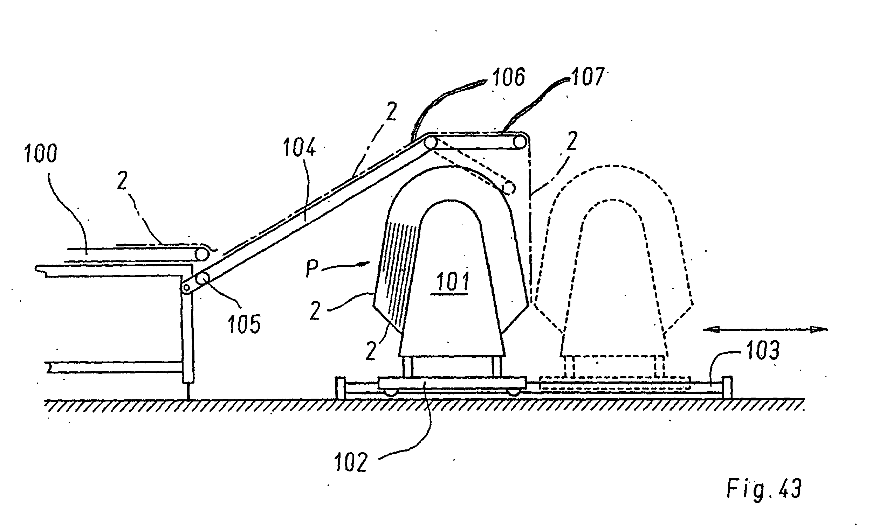

- Figure 43: is a schematic view of a device for receiving skin elements from belt conveyor means.

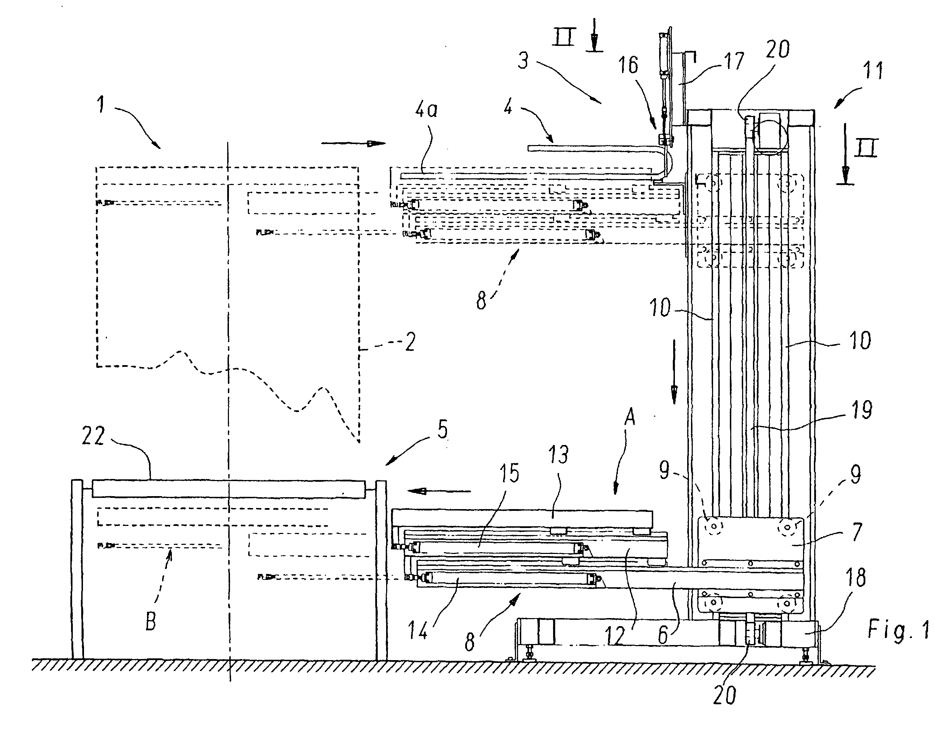

With reference to Figure 1, an apparatus 1 for handling skin elements is shown which provides for lifting of a skin element 2 from conveyor means 5 and loads the skin element onto a lower portion 4a of hanging rod means 4 horizontally extending above said conveyor means and forming part of overhead transferring means 3.

The conveyor means 5 are preferably oriented parallelly to the overhead transferring means 3.

According to an embodiment not shown, the conveyor means may include a plurality of transverse elements rectilinear and transversely disposed, such as motorized rollers, distributed in a comb-like arrangement.

The apparatus 1 is provided with telescopically extending arm means 8, horizontally disposed transversely of the conveyor means 5 in such a way as to extend from a withdrawn position A in which the arm means lays outside of the conveyor means 5 substantially under the transferring means 3, and an extended position B in which the arm means 8 cooperates with the conveyor means 5 and extends over or under the conveyor means, as will be explained below.

The arm means 8 is mounted on a vertically disposed frame 11, having the shape of a tower, extending from above the rod means 4 to under the conveyor means 5. The frame 11 is located on one side of the transferring means 3, on the other side thereof the conveyor means 5 being located.

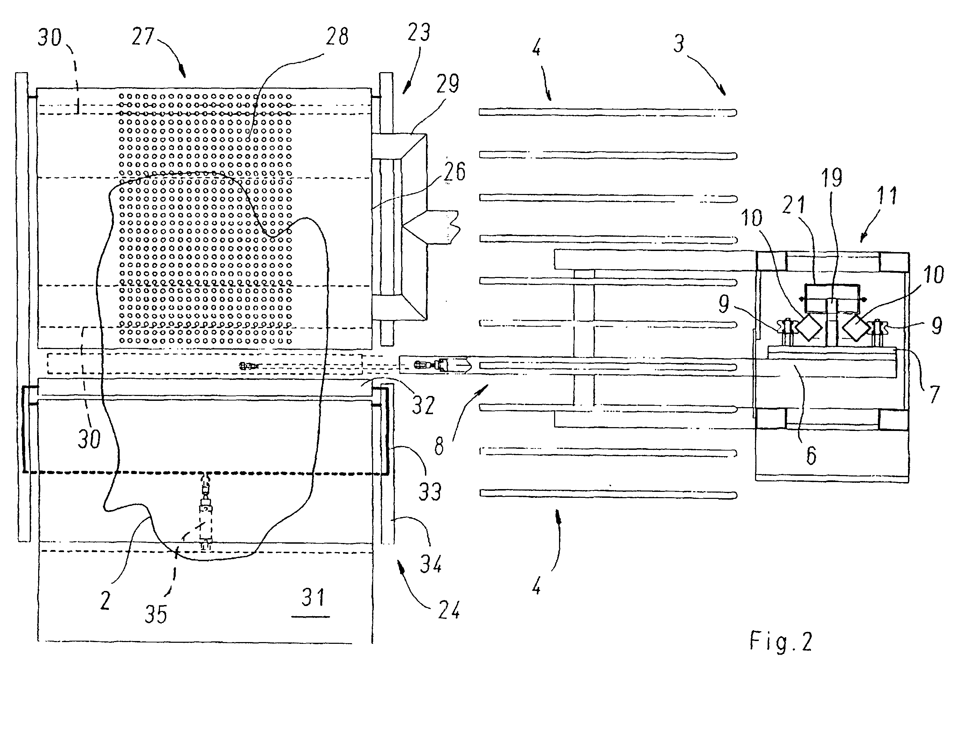

The arm means 8 comprises a support bar 6, projecting from vertically movable sliding means 7 having wheels 9 sliding on guide columns 10 of the frame 11. The sliding means 7 are connected to respective driving means 18 via a belt 19 wound on a plurality of pulleys 20, one of which is mounted on a driving shaft of the driving means 18. A counter-balance 21, shown in Figure 2, is fixed to the belt 19 so as to balance the weight of the arm means 8 and the sliding means 7.

The support bar 6 slidably supports a first arm portion 12 which, in turn, slidably supports a second arm portion 13. Between the first arm portion 12 and the support bar 6 first actuating means 14 are interposed and between the first arm portion and the second arm portion second actuating means 15 are interposed: this allows the arm means 8 to vary the respective operative length very quickly from the withdrawn position A to the extended position B.

In an embodiment not shown, the actuating means may include an endless chain engaging with toothed wheels supported internally of one arm portion 12 or the support bar 6, the chain been connected to a further arm portion, respectively 13, or 12 for displacing thereof.

The frame 11 has an upper part 17 which supports positioning means 16, which will be described later, for positioning the rod means 4 of the tranferring means 3 in an operative upper position wherein the skin elements 2 are loaded on, or downloaded from, the lower rod portion 4a.

The conveyor means 5 defines a resting surface 22 on which a skin element 2 is placed before being loaded on the rod 4 or after being downloaded from the arm portion 4. The conveyor means 5 comprises distinct first conveyor means 23 and second conveyor means 24 between which a gap 25 as defined, wide enough to let the arm means 8 pass from above to under the conveyor means 5, and vice versa, when the skin elements 2 are delivered on, or lifted from, the resting surface 22.

The first conveyor means 23 comprises a conveyor belt 26 having advantageously at least an intermediate portion 27 thereof provided with a purality of suct:ion apertures 28 connected to vacuum means 29 for depressurizing at least a corresponding intermediate part of a skin element 2 which is conveyed on the surface 22 of the conveyor belt 26. The vacuum means 29 includes a pair of channels 30 extencing transversely of the conveyor belt 26 and open towards the lower side of the conveyor belt 26 defining the resting surface 22.

The second conveyor means 24 comprises a plate 31, advantageously inclined downwardly to the gap 25 and defining a sloped portion of the resting surface 22.

A filling roller 32 is mounted on an horizontally movable frame 33 supported by respective guide means 34, the movable frame being associated to driving means 35: the filling roller 32 is movable between an operative position in which it fills the gap 25 and a neutral position in which it leaves the gap open so that the arm means 8 can pass therethrough in a vertical plane.

As shown in Figure .3, the second conveyor means 24 may comprise a further conveyor belt 36 instead of the plate 31. The further conveyor belt, as well as the plate 31, may be horizontally disposed, or inclined, and may advantageously be movable on the guide means 34 via respective driving means 37, i. e. a pneumatic cylinder, so as to fill the gap 25 when the skin element 2 passes from the first conveyor means 23 to the second conveyor means 24. This permits to eliminate the filling roller 32.

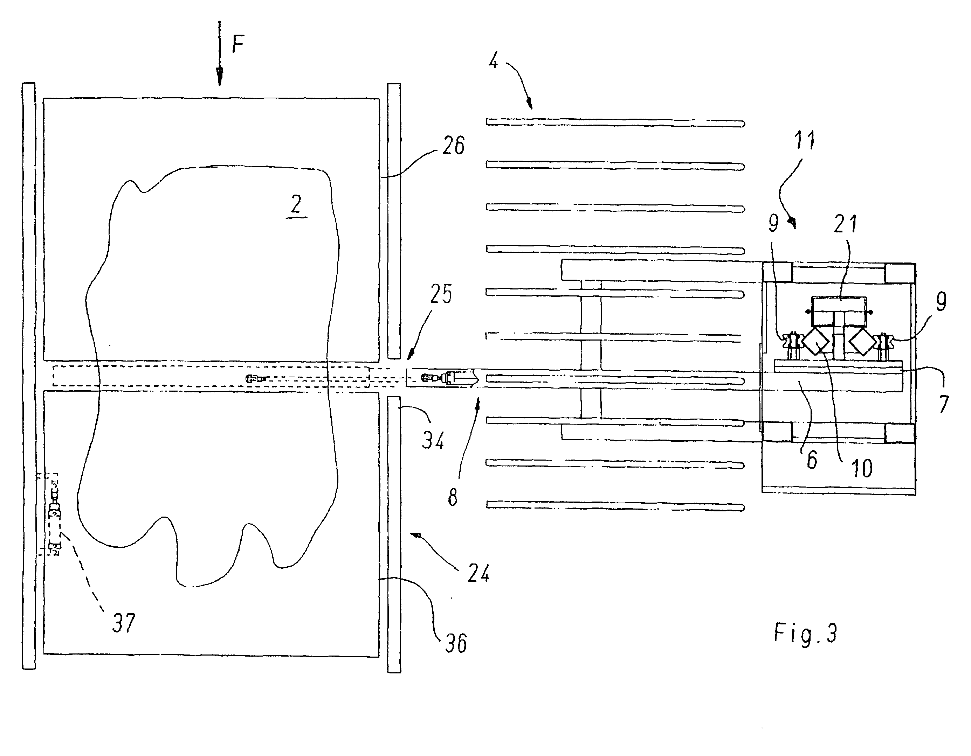

In use, the skin element 2 is conveyed by the first conveyor means 23 and is partially delivered to the second conveyor means 24, the gap 25 being substantially reduced by presence in it of the filling roller 32 or, in the embodiment shown in Figure 3, by advancement of the second conveyor belt 36 towards the first conveyor belt 26. When the skin element 2 is positioned in a centered position with respect to a vertical plane containing the arm means 8, which is achieved by providing position detecting means not shown, the gap 25 is opened between the first and second conveyor means, either by withdrawing the filling roller 32 or by moving apart the second conveyor means 24, and the arm means 8 is driven to descend under the surface 22 when still in the withdrawn position A; the arm means 8 is then introduced into the gap 25 so as to extend transversely from one side of the skin element 2 to the opposite side of it. After that, the arm means is lifted so that the skin element 2 is drawn upwardly and is balanced with a first flap 48 laying on one side of the arm means 8 and the other flap 49 on the other side of the arm means 8.

To ensure a correct positioning of the skin element 2 when passing from the first conveyor means 23 to the second conveyor means 24, the vacuum means may be activated, thereby causing a temporary adhesion between the skin element 2 and the conveyor belt 26.

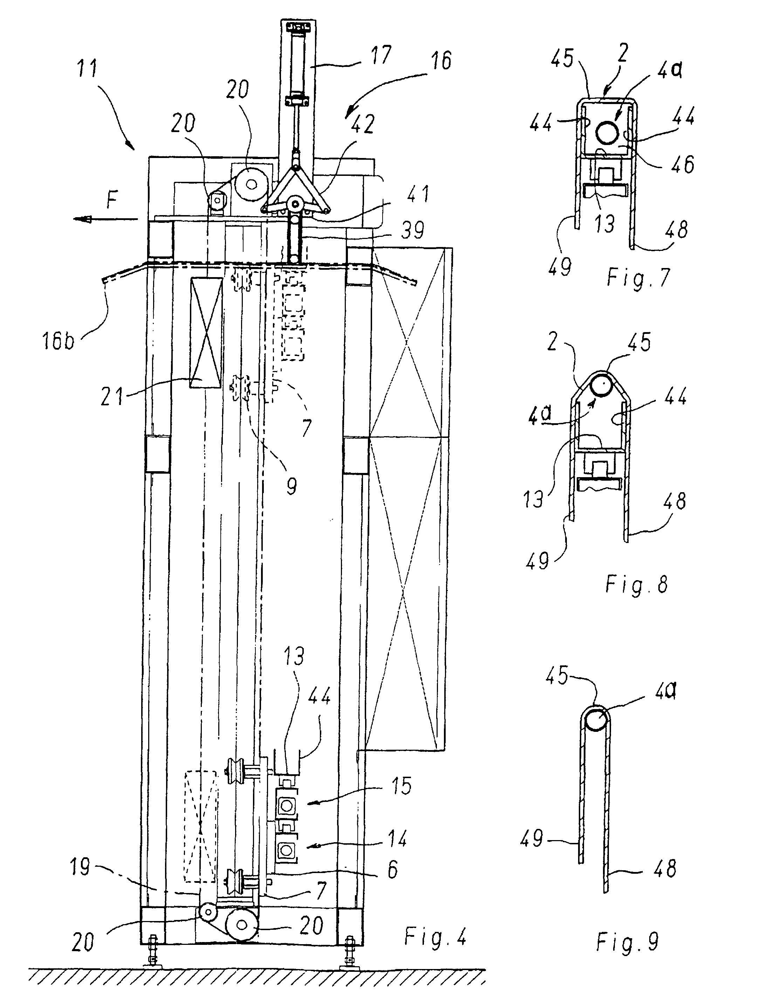

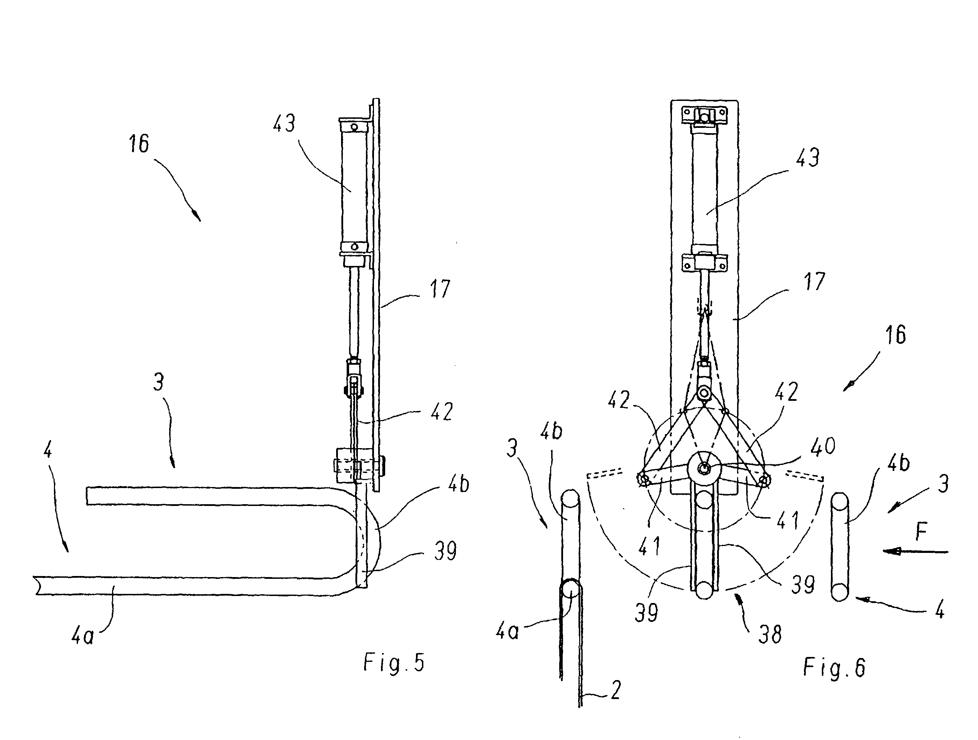

As shown in Figures 4 to 6, the positioning means 16 comprises clamp means 38 formed by a pair of jaws 39 pivotally joined at a common axis 40 and having each an outwardly oriented appendix 41 connected to a suitable driving means 43, i. e. a pneumatic cylinder, via a respective lever 42. The jaws 39 are angularly movable between a neutral open position (indicated in dotted line in Figure 6) in which free passage of the rod means 4 is allowed and a closed position in which the jaws are closed on the rod means 4. The positioning means 16 are kept open to allow indexing of the rod means 4 in the direction of arrow F and are closed on the rod means 4 to allow a precise positioning of the rod member 4 when the skin element 2 is delivered to the lower rod portion 4a. To allow indexing of the rod means 4, the transferring means 3 are provided with a chain means, not shown, interconnecting the rod means 4 at their respective bent end portion 4b. The positioning means 16 also include guide means 16b, for the rod memeber 4a of the rod means 4, said guide means 16b extending substantially parallely to the indexing direction F of the rod means 4.

As shown in Figure 7, a top portion 45 of the skin element 2 extends as a bridge over a pair of longitudinally extending walls 44 projecting upwardly from the second arm portion 13 and defining a channel 46 therebetween. The top portion 45 firstly reaches a higher position than the lower rod 4a so that the channel 46 is substantially aligned with the lower rod 4a; then the arm means are withdrawn to the withdrawn position A so that the lower rod 4a is introduced into the channel 46 and the top portion 45 extends over the lower rod 4. The arm means is then moved progressively downwards, as shown in Figure 8, so as to deliver the skin element 2 onto the lower rod 4a.

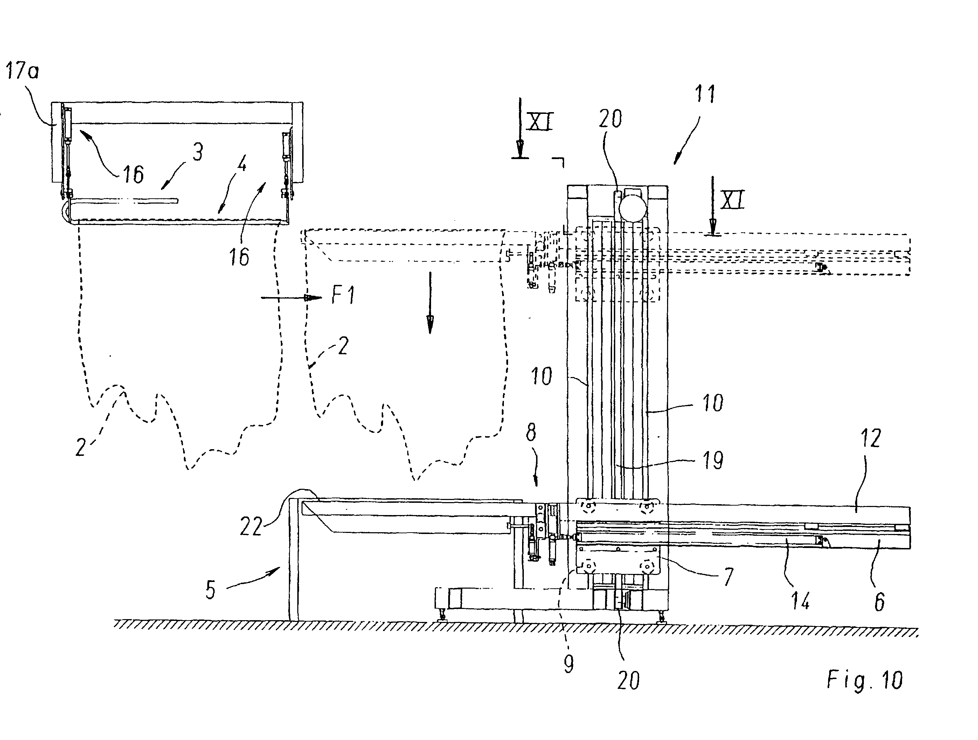

Referring now to Figure 10, a further embodiment of the apparatus is shown in which the conveyor means 5 is interposed between the vertical frame 11 and the transferring means 3.

The positioning means 16 are mounted on a supporting frame 17a, which is suspended from above at the transferring means 4.

In order to allow positioning of the rod means 4, the positioning means include a pair of jaws 39 engaging respective ends of each rod means 4.

When discharging of a skin element 2 hung'on the lower rod 4 has to be achieved, the arm means 8 is introduced under the lower rod 4 and then moved upwardly so as to lift the top portion of the skin element 2 from the lower rod 4.

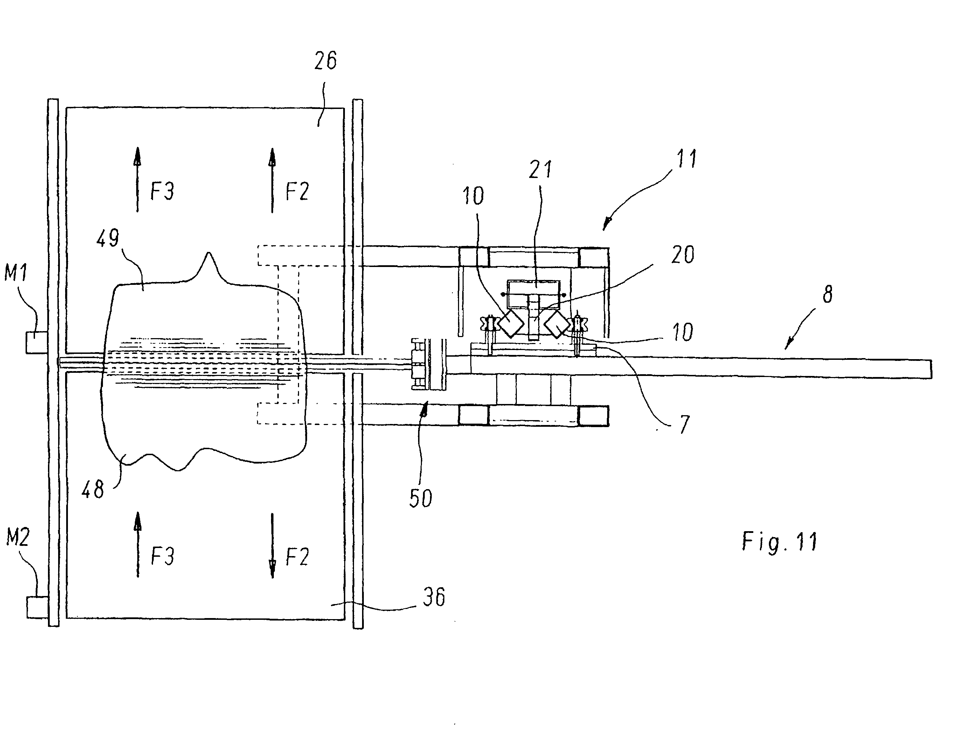

The arm means 8 and the skin element 2 suspended therefrom are subsequently withdrawn, as shown by the arrow F1, until the skin element 2 is positioned over.the conveyor means 5 and the arm means 8 is then progressively lowered so that lower portions of the flaps 48 and 49 correspondingly progressively delivered each onto respective first and second coveyor means 26, 36. The conveyor means 26 and 36 are driven, by independent driving means M1 and M2 respectively, in opposite directions, as indicated by arrow F2 in Figure 11, so as to distribute the descending flaps 48 and 49 on the resting surface 22 of the conveyor means 26, 36. The downward movement of the arm means 8 continues until the arm means 8 comes through the gap 25 and the skin element 2 is completely downloaded on the conveyor means 26, 36. After that, the conveyor means 26 and 36 are driven in the same direction, as indicated by arrow F3 in Figure 11, so that the skin element 2 may be displaced.

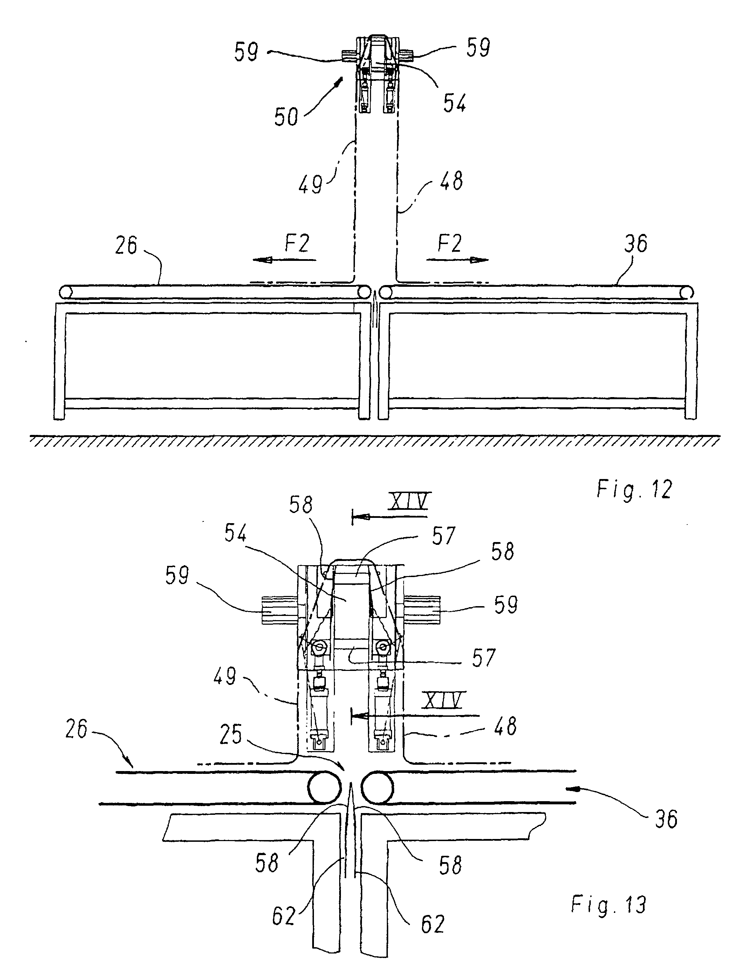

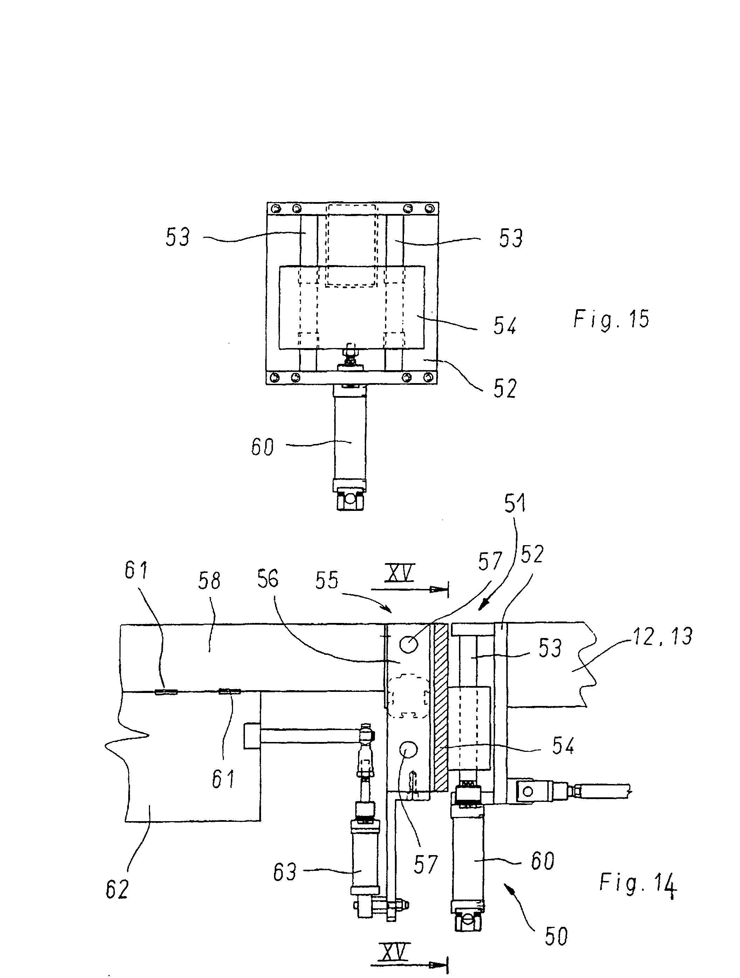

Referring to Figures 12 to 15, divaricating means 50 are shown mounted on the arm means 8 for divaticating the flaps 48 and 49 of the skin element 2, particularly during a downloading operation. The divaricating means 50 comprises vertically movable sliding means 51 comprising a supporting plate 52 fixed at a free end of the arm portion 12, or 13. The supporting plate 53 supports a pair of vertically disposed guide columns 53 on which a vertical slide member 54 is slidably engaged, said vertical slide member 54 being driven by a pneumatic cylinder 60. On the slide member 54 a pair of horizontally movable opposed sliding means 55 is supported including each a horizontal slide member 56 from which a respective first divaricating plate 58 projects substantially horizontally. The pair of horizontal slide members 56 is slidably engaged on horizontal guide bars 57 and each member is movable on those guide bars via horizontally disposed pneumatic cylinders 59. The lower edge of each first divaricating plate 58 is provided with hinge means 61 for supporting a respective second divaricating plate 62; the first divaricating plates 58 are preferably fixed each to the respective horizontal slide member 56 so as to be slightly converging upwardly, while the second divaricating plates 62 are angularly adjustable via pneumatic cylinders 63 supported by the respective horizontal slide member 56. In use, the first and second divaricating plates 62, 58 are kept in a closed position, by operation of the respective pneumatic cylinders 63, 59, as shown in the bottom part of Figure 13, so as to pass through the gap 25 when delivering the skin element 2 on the conveyor means 26, 36. The first and second divaricating plates 62, 58 are also kept in a closed position when the arm means 8 enters between the flaps 48 and 49 for downloading a skin element 2 hung on a lower rod 4. Once the arm means has entered through the flaps 48 and 49 and has been lifted by the first sliding means 7 so that the upper edges of the first divaricating plates touch the inner surface of the skind element 2 aside the rod 4, the pneumatic cylinders 60 are operated so as to lift the skin from the rod 4. Subsequently, the arm means 8 is withdrawn and moved downwardly for delivering the skin element 2 on the conveyor means 5.

The divaricating plates 58, 62 may be substituted by divaricating bars, not shown.

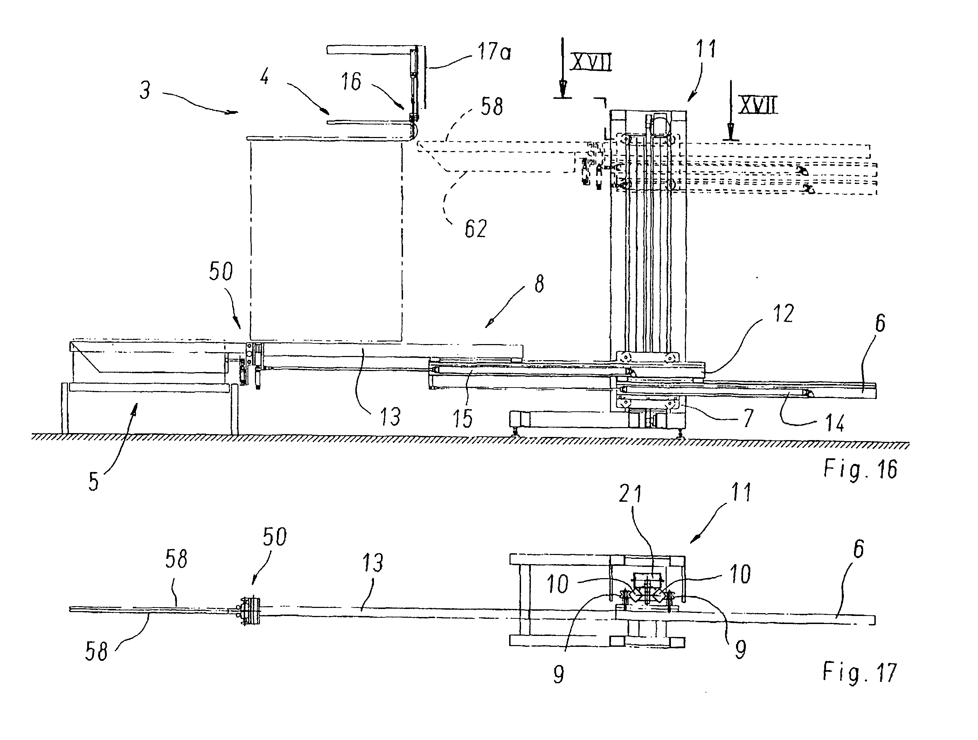

In Figures 16 and 17 a further embodiment of the invention is shown in which the overhead transferring means 3 is interposed between and is located above the conveyor means 5 and the vertical frame 11.

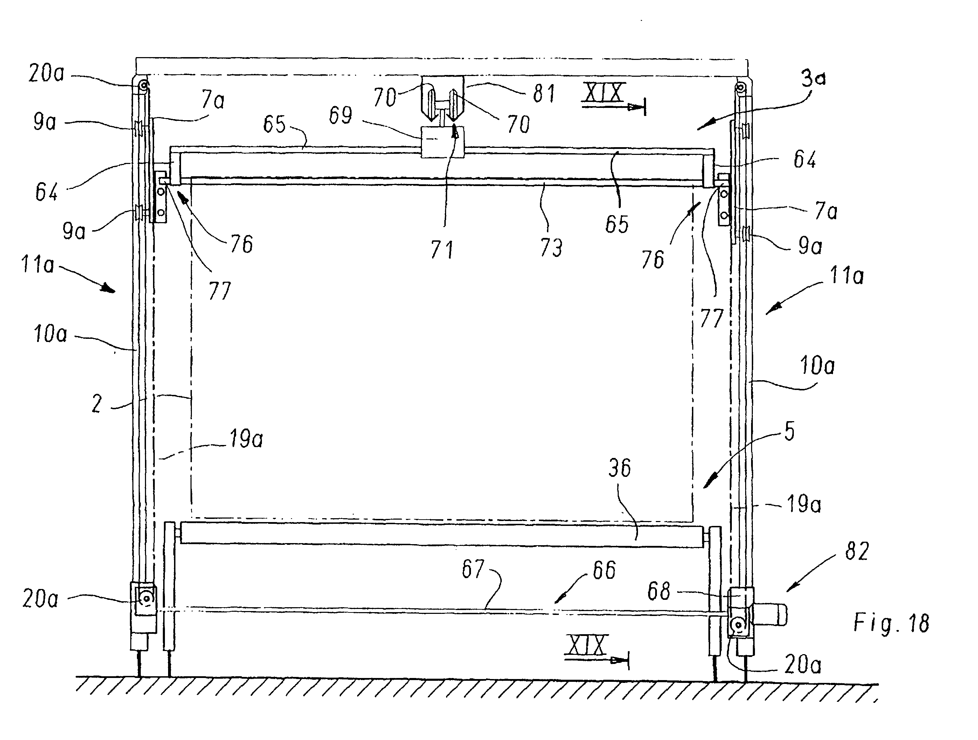

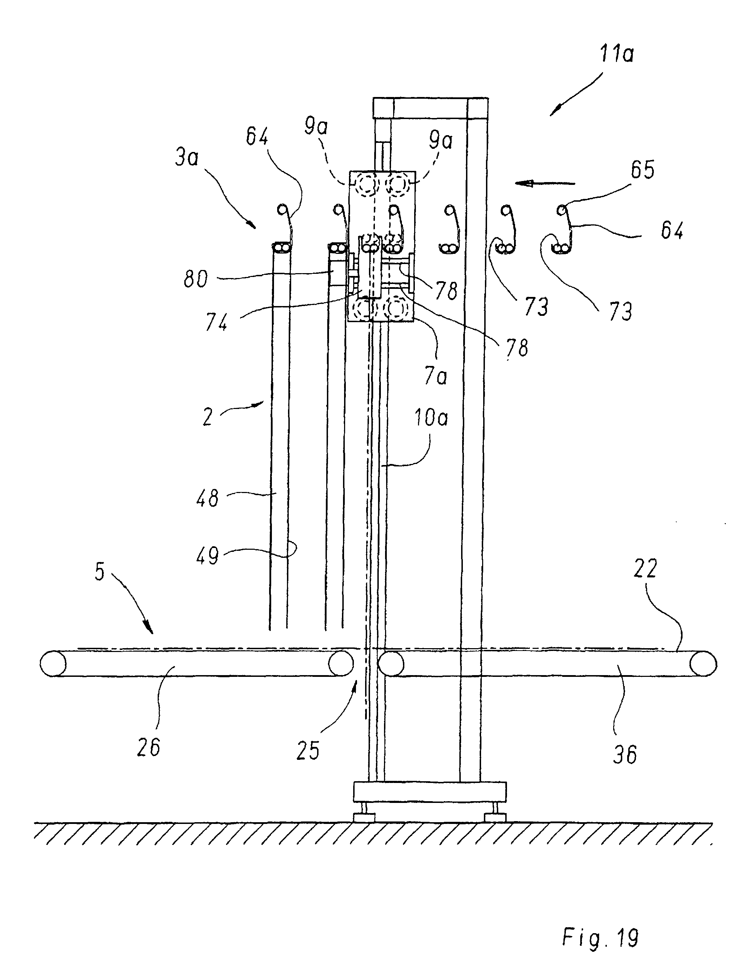

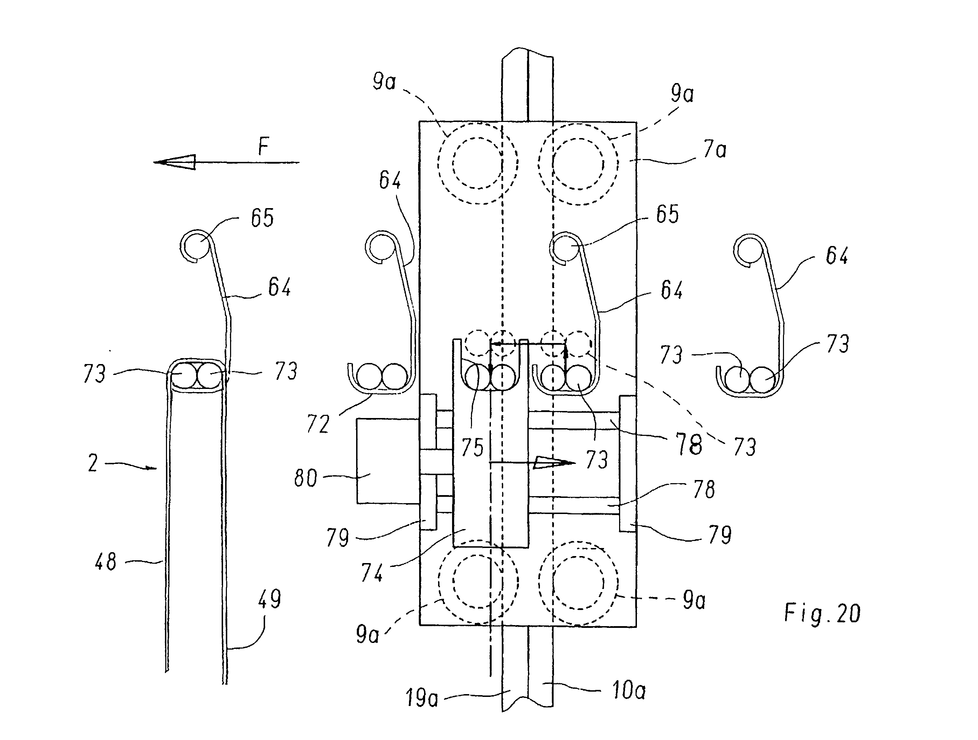

In Figure 18 and 19 a further embodiment of the invention is shown, in which overhead transferring means 3a includes a pair of hook supports 64 projecting downwards from both ends of a connecting rod 65 which slidably cooperates, at an intermediate portion thereof, with overhead guide means 81 by a sliding intermediate support 69 having pair of rollers 70 sliding on and into said guide mean and passing through a lower aperture 71 of said guide means 81. On both sides of the conveyor means 5 a vertically extending frame support 11a is located, provided each with a respective guide column 10a on which a respective sliding means 7a is slidably engaged by means of pairs of wheels 9a. Each sliding means 7a is provided with a driving belt 19a wound on a pair of respective end pulleys 20a. Syncronous vertical movement of the sliding means 7a is achieved by common driving means 82, i.e. an electric motor, and by transmission means 66 including a transmission shaft 67 connecting the end pulleys 20a supported at the lowemost end of the frame 11a, and by a speed reducer 68 interposed between the motor 82 and the transmission shaft 67. The arrangement is such that the motor 82 moves each of the sliding means 7a simultaneously and at the same speed. As can be seen in Figure 20, each pair of hook supports 64 accomodates, at a respective lower concave portion 72 of each hook support 64, intermediate end portions 76 of a pair of support rods 73 supporting the skin element 2 hung thereto. An operative head 74 having an upper end seat 75 shaped in substantially the same way as the concave portion 72 of each hook support 64 is connected to each sliding means 7a so as to be able to engage end portions 77 of the pair of supporting rods 73 outwardly projecting from said concave portions 72 and located externally of the intermediate end portions 76. Each operative head 74 is mounted on horizontally disposed guide means 78 extending between appendixes 79 projecting from the sliding means 7a. the operative head is displaceable along guide means by linear driving means 80, i.e. a pneumatic cylinder.

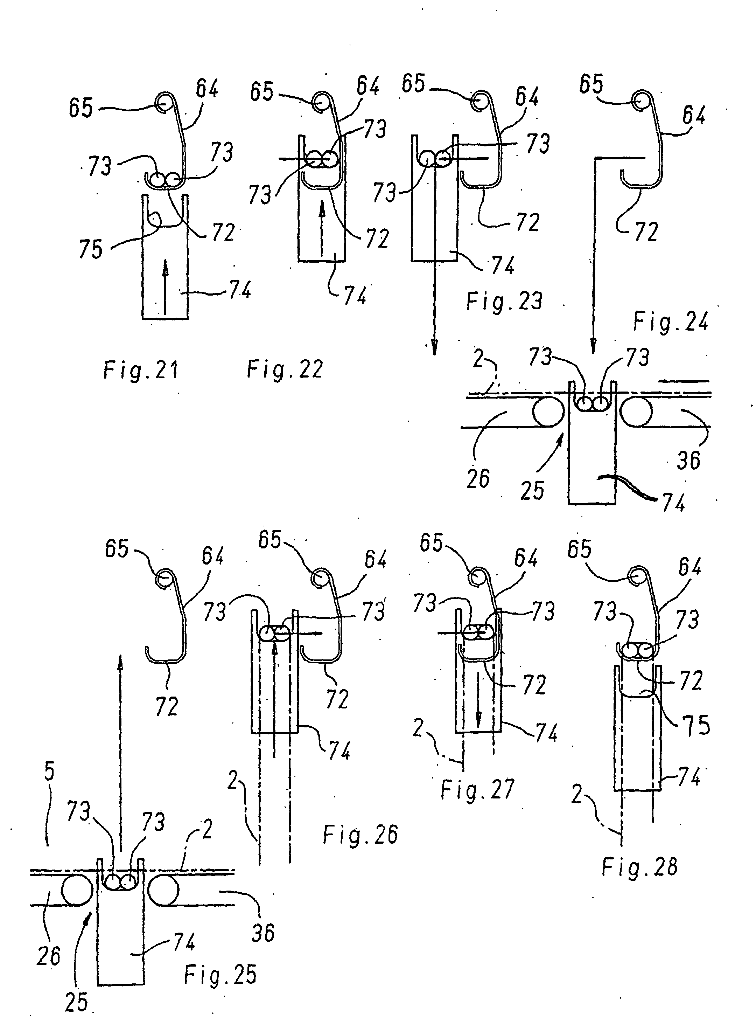

A sequence schematically showing the steps for downloading a skin element 2 from the support hooks 64 to the conveyor means 5 is shown in Figures 21 to 24. To improve clarity of the drawings, the skin element 2 has only been depicted in some of the Figures. When transferring of a skin element 2 supported by the supporting rods 73 to the conveyor means 5 is required, the operative heads 74 are positioned under the rod 73 and then moved upwards (Fig. 21) so that the respective seats 75 accomodate the end portions 77 of the rods 73 and lift the rods from the concave portions 72 of the hook supports 64 (Fig. 22). The operative heads 74 are subsequently moved laterally externally of the hook supports 64 (Fig. 23) so as to avoid interference with the concave portions 72, when lowering, and then moved downwardly towards the conveyor means 5 so that the operative heads 74 deliver the skin element onto the conveyor means 5 (Fig. 24).

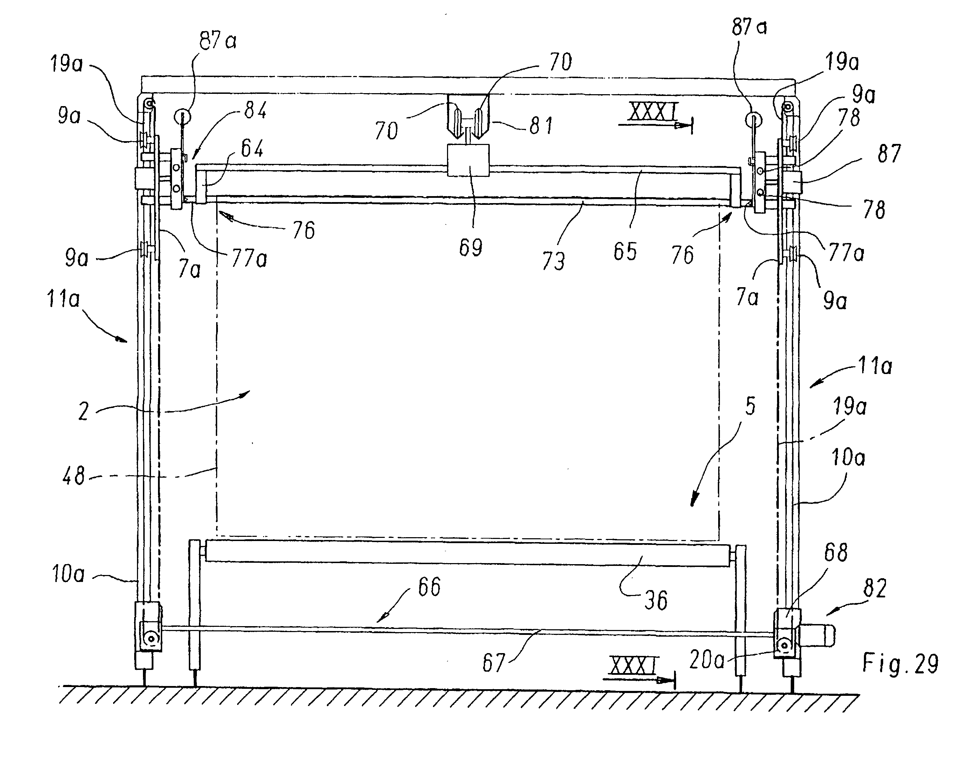

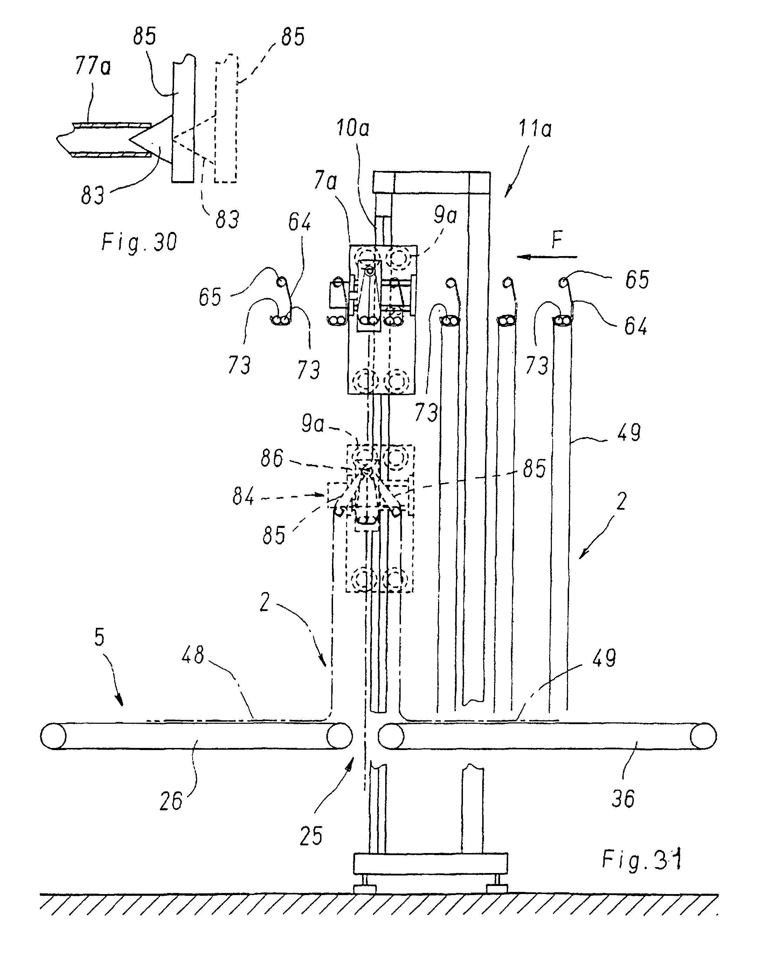

In Figures 25 to 28 a further step sequence is shown, having steps showing an inverted sequence with respect to the sequence of Figures 21 to 24, i.e. showing the same movements but performed in inverted order and in inverted directions, the further sequence providing for transferring of the skin element 2 from the conveyor means 5 to the hook supports 64. Figures 29 to 33 show a machine similar to the embodiment shown in Figures 18 to 20, but has at least end portions 77a of the pairs of support rods 73 which are tubular so as to accomodate corresponding pairs of conical projections 83 (Figure 30) of a divaricator device 84 mounted on each sliding means 7a. Each divaricator device 84 comprises a pair of hinged levers 85 hinged at their upper end at an hinge shaft 86 and oscillating, by means of a pneumatic cylinder between a closed position, shown in Figure 32, in which the pairs of rods 73 are close to each other and an open position, shown in Figure 33, in which the pairs of rods 73 are pulled apart from each other by divarication of the conical projections 83. In the open position of the lever 85, the flaps 48 and 49 of the skin element 2 are spaced apart of a distance grater than the gap 25 of the underlying conveyor means 5, in such a way as to deliver progressively the flaps 48 and 49 on the conveyor means 26 and 36, when moving downwards.

The divaricator device 84 is supported by the operative head 74 and has the hinge shaft extending parallely to the longitudinal axis of the rods 73 and movable in that axial direction by driving means 87 for moving the conical projections 83 from a position in which they do not interfere with the end 77a, shown in dotted line in Figure 30, to a position in which the conical projections are inserted in a centered position into the ends 77a.

In Figures 34 to 38. a sequence of steps is shown for transferring a skin element 2 from the rod 73 to the conveyor means 5. The levers 85 are firstly moved by the driving means 87 so as to introduce the conical projections 83 into the ends 77a (Figure 34). Subsequently, the operative head 7a is moved upwards so as to lift the rods 73 over the concave portion 72 of the hook support 64 (Figure 35) and then the rods 73 are displaced laterally to exit from the hook support so as not to interfere with the hook support when descending (Figure 36). The rods 73 are moved downwardly and pulled apart so as to displace the flaps 48 and 49 one with respect to the other at a distance (D) greater than the gap 25. The levers 85 are then closed again to pass trough the gap 25 without interfering with the conveyors 26 and 36 (Figure 39).

When transfer of the skin element from the conveyor means 5 to the hook support 64 is required, the sequence of operative steps is the same as described with respect to Figures 25 to 28: no divarication of the oscillating levers is necessary. When the skin element 2 has been delivered to the hook support 64, the conical projections 83 are disengaged from the end 77a by the driving means 87.

In Figure 43 an apparatus is shown for delivering skin elements 2 from a conveyor 100 to a support 101, comprising a an upwardly narrowing body mounted on carriage means 102 on guide means 103, the carriage means 102 being movable from a position closer to the conveyor 100 to a position which is further from the conveyor 100. Between the conveyor 100 and the support 101 an intermediate conveyor 104 is interposed, extending above the support 101 at least when the support 101 is closer to the conveyor 100. The movement of the support 101 on the guide means 103 is controlled in such a way that when the skin element 2 begins to drop from the conveyor 104, the support passes under the conveyor and collects the skin element while it continues to descend towards the support 101 on a pile P of skin elements. The intermediate conveyor 104 may be pivotally connected at an end 105 proximate to the conveyor 100 to the corresponding end of the conveyor 100 so as to be angularly adjustable in order to deliver the skin elements 2 at different heights.

At the opposite end 106, the intermediate conveyor 104 may support in a hinging manner, a further conveyor 107, angularly adjustable so as to better adjust the position at which the skin element 2 is delivered to the support 101.

It is to be understood that the various parts and devices described in the above description of the invention and/or shown in the attached drawings have been included in a preferred combination, but could also well be considered isolately, particularly for the puroposes of seeking individual protection for those parts and devices.

## Claims

1. An apparatus for handling of substantially flat and flexible items (2), particularly skin elements, comprising overhead transferring means (3; 3a) for supporting and transferring the items (2), conveyor means (5) for said items (2) being provided under said transferring means (3; 3a), said conveyor means (5) cooperating with vertically movable displacing means (8, 11; 7a, 11a) for displacing said items (2) between said transferring means (3; 3a) and said conveyor means (5), **characterized in that** said vertically movable displacing means (8, 11; 7a, 11a) comprises skin element support arm means (6, 12, 13; 73, 74).

2. An apparatus according to claim 1, wherein said skin element support arm means (6,12,13;73,74) is vertically movable along vertically extending frame means (11; 11a).

3. An apparatus according to claim 2, wherein said skin element suppory arm means (6,12,13;73,74) includes a support bar (6) and at least one arm portion (12, 13) slidably connected to said support bar (6) or to a further arm portion (12).

4. An apparatus according to claim 3, wherein said arm portion (12, 13) is provided with a pair of upwardly extending walls (44) between which is insertable a rod member (4a) of said overhead transferring means (3; 3a).

5. An apparatus according to claim 2, wherein said skin element support arm means (73) is received in a removable manner at both ends into a respective pair of hook support members (64) of said overhead transferring means (3a).

6. An apparatus according to claim 5, wherein said skin element support arm means comprises a pair of rods (73), extending substantially parallely to one another, cooperating with divaricating means (83, 85) of said vertically movable displacing means (11a).

7. An apparatus according to claim 5, or 6, wherein end portions of said skin element support arm means (73) are received into respective concave seats (75) of opposing operative heads (74) of said vertically movable displacing means (11a).

8. An apparatus according to any one of claims 2 to 7, wherein said overhead transferring means (3; 3a) cooperate with positioning means (16) disposed at a location where said skin element support arm means (4; 65) are operative.

9. An apparatus according to any one of claims 1 to 8, wherein said conveyor means (5) is provided with a gap means (25) wide enough to accomodate said skin element support arm means (8; 73).

10. An apparatus according to claim 9, wherein said conveyor means (5) includes first conveyor means (23) and second conveyor means (24) at opposite sides of said gap means (25).

11. An apparatus according to claim 10, wherein said first (26) and/or said second (36) conveyor means is a conveyor belt.

12. An apparatus according to claim 11, wherein said conveyor belt has a gas-permeable section (27) under which vacuum means (29, 30) extends.

13. An apparatus according to claim 10, wherein said first and/or second conveyor means comprises a plurality of rollers.

14. An apparatus according to claim 10, wherein said first and/or second conveyor means comprises a plate (31).

15. An apparatus according to any one of claims 10 to 14, wherein said first (26) and/or second 31; 36) conveyor means are reciprocable via driving means (37) to substantially reduce the dimensions of said gap means (25).

16. An apparatus according to any one of claims 10 to 14, wherein filling means (32) is insertable 'into said gap means (25) to substantially obstruct said gap means (25).

17. An apparatus according to any one of the preceding claims wherein said skin element support arm means (8) are provided with divaricating elements (58, 62) for divaricating parts (48, 49) of said items (2).

18. A method for handling substantially flat and flexible items (2), particularly skin elements, comprising removing said items (2) from, or delivering said items to, overhead transferring means (3; 3a) for supporting and transferring the items (2), said removing and/or said delivering being performed by vertically movable displacing means (8, 11; 7a, 11a) movable from said transferring means (3; 3a) to downwardly extending conveyor means (5) and vice versa, **characterized in that** said removing and/or said delivering comprises moving skin element support arm means (6, 12, 13; 73, 74) associated with said vertically movable displacing means (8, 11; 7a, 11a).

19. Method according to claim 18, wherein said removing and/or said delivering is performed by means of said skin element support arm means (8; 73) passing through a gap (25) of said conveyor means (5).

20. A method according to claim 19, wherein removing of said items (2) from said conveyor means (5) occurs after said items (2) have reached a substantially centered position on said conveyor means (5) with respect to said skin element support arm means (8; 73).

21. A method according to claim 19, wherein delivering of said items (2) from said arm means comprises driving separate sections (26, 36) of said conveyor means (5) in opposite and diverging directions (F2), so as to progressively lay the item (2) on said conveyor means (5) as said skin element support arm means (8) are lowered.

## Patentansprüche

1. Vorrichtung zum Handhaben von im Wesentlichen flachen und flexiblen Gegenständen (2), insbesondere von Hautelementen, mit Über-Kopf-Umsetzmitteln (3; 3a) zum Halten und Umsetzen der Gegenstände (2), wobei Fördermittel (5) für die genannten Gegenstände (2) unter den Umsetzmitteln (3; 3a) vorgesehen sind, wobei die Fördermittel (5) mit vertikal beweglichen Verfahrmitteln (8, 11; 7a, 11a) zum Verfahren der Gegenstände (2) zwischen den Umsetzmitteln (3; 3a) und den Fördermitteln (5) zusammenwirken, **dadurch gekennzeichnet, dass** die vertikal beweglichen Verfahrmittel (8, 11; 7a, 11a) Hautelement-Haltearmmittel (6, 12, 13; 73, 74) aufweisen.

2. Vorrichtung nach Anspruch 1, wobei die Hautelement-Haltearmmittel (6, 12, 13; 73, 74) entlang sich vertikal erstreckender Rahmenmittel (11; 11a) vertikal beweglich sind.

3. Vorrichtung nach Anspruch 2, wobei die Hautelement-Haltearmmittel (6, 12, 13; 73, 74) einen Haltestab (6) und zumindest einen Armabschnitt (12, 13) umfassen, der gleitend mit dem Haltestab (6) oder einem weiteren Armabschnitt (12) verbunden ist.

4. Vorrichtung nach Anspruch 3, wobei der Armabschnitt (12, 13) mit einem Paar sich nach oben erstreckender Wände (44) versehen ist, zwischen denen ein Stangenelement (4a) der Über-Kopf-Umsetzmittel (3; 3a) einsetzbar ist.

5. Vorrichtung nach Anspruch 2, wobei die Hautelement-Haltearmmittel (73) abnehmbar an beiden Enden in ein jeweiliges Paar Haken-Halteglieder (64) der Über-Kopf-Umsetzmittel (3a) aufgenommen sind.

6. Vorrichtung nach Anspruch 5, wobei die Hautelement-Haltearmmittel ein Paar Stangen (73) aufweisen, die sich im Wesentlichen parallel zueinander erstrecken und mit Spreizmitteln (83, 85) der vertikal beweglichen Verfahrmittel (11a) zusammenwirken.

7. Vorrichtung nach Anspruch 5 oder 6, wobei Endabschnitte der Hautelement-Haltearmmittel (73) in jeweiligen konkaven Aufnahmen (75) von entgegengesetzt wirkenden Köpfen (74) der vertikal beweglichen Verfahrmittel (11a) aufgenommen sind.

8. Vorrichtung nach einem der Ansprüche 2 bis 7, wobei die Über-Kopf-Umsetzmittel (3; 3a) mit Positioniermitteln (16) zusammenwirken, die an einer Stelle angeordnet sind, wo die Hautelement-Haltearmmittel (4; 65) wirken.

9. Vorrichtung nach einem der Ansprüche 1 bis 8, wobei die Fördermittel (5) mit Lückenmitteln (25) versehen sind, die breit genug sind, um die Hautelement-Haltearmmittel (8; 73) aufzunehmen.

10. Vorrichtung nach Anspruch 9, wobei die Fördermittel (5) erste Fördermittel (23) und zweite Fördermittel (24) an gegenüberliegenden Seiten der Lückenmittel (25) umfassen.

11. Vorrichtung nach Anspruch 10, wobei die ersten (26) und/oder zweiten (36) Fördermittel ein Förderband sind.

12. Vorrichtung nach Anspruch 11, wobei das Förderband einen gasdurchlässigen Bereich (27) aufweist, unter dem sich Vakuummittel (29, 30) erstrecken.

13. Vorrichtung nach Anspruch 10, wobei die ersten und/oder zweiten Fördermittel eine Mehrzahl von Rollen aufweisen.

14. Vorrichtung nach Anspruch 10, wobei die ersten und/oder zweiten Fördermittel eine Platte (31) aufweisen.

15. Vorrichtung nach einem der Ansprüche 10 bis 14, wobei die ersten (26) und/oder zweiten (31, 36) Fördermittel über Antriebsmittel (37) umkehrbar sind, um die Abmessungen der Lückenmittel (25) im Wesentlichen zu vermindern.

16. Vorrichtung nach einem der Ansprüche 10 bis 14, wobei Füllmittel (32) in die Lückenmittel (25) einsetzbar sind, um die Lückenmittel (25) im Wesentlichen zu verschließen.

17. Vorrichtung nach einem der vorhergehenden Ansprüche, wobei die Hautelement-Haltearmmittel (8) mit Spreizelementen (58, 62) zum Spreizen von Teilen (48, 49) der Gegenstände (2) versehen sind.

18. Verfahren zum Handhaben von im Wesentlichen flachen und flexiblen Gegenständen (2), insbesondere von Hautelementen, mit: Abnehmen der Gegenstände (2) von oder Zuführen der Gegenstände zu über-Kopf-Umsetzmitteln (3; 3a) zum Halten und Umsetzen der Gegenstände (2), wobei das Abnehmen und/oder das Zuführen durch vertikal bewegliche Verfahrmittel (8, 11; 7a, 11a) durchgeführt wird, die von den Umsetzmitteln (3; 3a) zu sich nach unten erstreckenden Fördermitteln (5) und umgekehrt beweglich sind, **dadurch gekennzeichnet, dass** das Abnehmen und/oder das Zuführen ein Bewegen von Hautelement-Haltearmmitteln (6, 12, 13; 73, 74) umfasst, die den vertikal beweglichen Verfahrmitteln (8, 11; 7a, 11a) zugeordnet sind.

19. Verfahren nach Anspruch 18, wobei das Abnehmen und/oder das Zuführen mittels der Hautelement-Haltearmmittel (8; 73) durchgeführt wird, die durch eine Lücke (25) der Fördermittel (5) hindurchgehen.

20. Verfahren nach Anspruch 19, wobei ein Abnehmen der Gegenstände (2) von den Fördermitteln (5) erfolgt, nachdem die Gegenstände (2) eine im Wesentlichen zentrierte Position auf den Fördermitteln (5) bezüglich der Hautelement-Haltearmmittel (8; 73) erreicht haben.

21. Verfahren nach Anspruch 19, wobei ein Zuführen der Gegenstände (2) von den Armmitteln ein Antreiben getrennter Bereiche (26, 36) der Fördermittel (5) in entgegengesetzten und divergierenden Richtungen (F2) umfasst, um so den Gegenstand (2) fortschreitend auf die Fördermittel (5) zu legen, wenn die Hautelement-Haltearmmittel (8) abgesenkt sind.

## Revendications

1. Dispositif de manipulation d'articles sensiblement plats et flexibles (2), en particulier des éléments en peau, comprenant des moyens (3 ; 3a) de transfert situés en hauteur destinés à supporter et transférer les articles (2), des moyens transporteurs (5) pour lesdits articles (2) étant présents sous lesdits moyens de transfert (3 ; 3a), lesdits moyens transporteurs (5) coopérant avec des moyens de déplacement (8, 11 ; 7a, 11a) mobiles verticalement destinés à déplacer lesdits articles (2) entre lesdits moyens de transfert (3 ; 3a) et lesdits moyens transporteurs (5), ***caractérisé en ce que*** lesdits moyens de déplacement (8, 11 ; 7a, 11a) mobiles verticalement comprennent des moyens (6, 12, 13 ; 73, 74) de bras de support des articles de peau.

2. Dispositif selon la revendication 1, dans lequel lesdits moyens (6, 12, 13 ; 73, 74) de bras de support des éléments en peau sont mobiles verticalement le long de moyens de châssis (11 ; 11a) s'étendant verticalement.

3. Dispositif selon la revendication 2, dans lequel lesdits moyens (6, 12, 13 ; 73, 74) de bras de support des articles de peau comprennent une barre de support (6) et au moins une portion formant bras (12, 13) reliée de manière coulissante à ladite barre de support (6) ou à une autre portion formant bras (12).

4. Dispositif selon la revendication 3, dans lequel ladite portion formant bras (12, 13) possède deux parois (44) s'étendant vers le haut entre lesquelles est insérable un élément de tige (4a) desdits moyens de transfert (3 ; 3a) situés en hauteur.

5. Dispositif selon la revendication 2, dans lequel lesdits moyens (73) de bras de support des articles de peau sont reçus de manière amovible à leurs deux extrémités dans deux éléments de support à crochet (64) respectifs desdits moyens (3a) de transfert situés en hauteur.

6. Dispositif selon la revendication 5, dans lequel lesdits moyens de bras de support des articles de peau comprennent deux tiges (73) s'étendant sensiblement parallèlement entre elles, coopérant avec des moyens écarteurs (83, 85) desdits moyens de déplacement mobiles verticalement (11a).

7. Dispositif selon la revendication 5 ou 6, dans lequel les extrémités desdits moyens (73) de bras de support des articles de peau sont reçues dans des sièges concaves respectifs (75) de têtes actives opposées desdits moyens (11a) de déplacement mobiles verticalement.

8. Dispositif selon l'une quelconque des revendications 2 à 7, dans lequel lesdits moyens (3 ; 3a) de transfert situés en hauteur coopèrent avec des moyens de positionnement (16) disposés en un emplacement où lesdits moyens (4 ; 65) de bras de support des éléments de peau sont actifs.

9. Dispositif selon l'une quelconque des revendications 1 à 8, dans lequel lesdits moyens transporteurs (5) présentent un moyen d'intervalle (25) suffisamment large pour recevoir lesdits moyens (8 ; 73) de bras de support des éléments de peau.

10. Dispositif selon la revendication 9, dans lequel lesdits moyens transporteurs (5) comprennent des premiers moyens transporteurs (23) et des seconds moyens transporteurs (24) sur des côtés opposés desdits moyens d'intervalle (25).

11. Dispositif selon la revendication 10, dans lequel lesdits premiers (26) et/ou lesdits seconds (36) moyens transporteurs sont une bande transporteuse.

12. Dispositif selon la revendication 11, dans lequel ladite bande transporteuse possède une section (27) perméable aux gaz sous laquelle s'étendent des moyens de vide (29, 30).

13. Dispositif selon la revendication 10, dans lequel lesdits premiers et/ou lesdits seconds moyens transporteurs comprennent une pluralité de galets.

14. Dispositif selon la revendication 10, dans lequel lesdits premiers et/ou lesdits seconds moyens transporteurs comprennent une plaque (31).

15. Dispositif selon l'une quelconque des revendications 10 à 14, dans lequel lesdits premiers (26) et/ou seconds (31 ; 36) moyens transporteurs sont mûs d'un mouvement alternatif par des moyens d'entraînement (37) afin de réduire sensiblement les dimensions dudit moyen d'intervalle (25).

16. Dispositif selon l'une quelconque des revendications 10 à 14, dans lequel des moyens de remplissage (32) sont insérables dans ledit moyen d'intervalle (25) afin d'obstruer substantiellement ledit moyen d'intervalle (25).

17. Dispositif de support d'éléments en peau selon l'une quelconque des revendications précédentes, dans lequel lesdits moyens (8) de bras de support des éléments en peau sont munis d'éléments écarteurs (58, 62) pour faire s'écarter des parties (48, 49) desdits articles (2).

18. Procédé de manipulation d'articles sensiblement plats et flexibles (2), en particulier des éléments en peau, comprenant le retrait desdits articles (2) ou la fourniture desdits articles des/aux dits moyens (3 ; 3a) de transfert situés en hauteur pour supporter et transférer les articles (2), ledit retrait et/ou ladite fourniture étant réalisés par des moyens de déplacement (8, 11; 7a, 11a) mobiles verticalement depuis lesdits moyens de transfert (3 ; 3a) vers des moyens transporteurs (5) s'étendant vers le bas et vice-versa, ***caractérisé en ce que*** ledit retrait et/ou ladite fourniture comprennent des moyens (6, 12, 13 ; 73, 74) de bras de support des articles de peau associés auxdits moyens de déplacement (8, 11 ; 7a, 1 1a) mobiles verticalement.

19. Procédé selon la revendication 18, dans lequel ledit retrait et/ou ladite livraison est effectué au moyen desdits moyens (8 ; 73) de bras de support des éléments en peau traversant un intervalle (25) desdits moyens transporteurs (5).

20. Procédé selon la revendication 19, dans lequel le retrait desdits articles (2) desdits moyens transporteurs (5) se fait après que lesdits articles (2) aient atteint une position sensiblement centrale sur lesdits moyens transporteurs (5) par rapport auxdits moyens (8 ; 73) de bras de support des éléments en peau.

21. Procédé selon la revendication 19, dans lequel ladite livraison desdits articles (2) depuis lesdits moyens de bras comprend l'entraînement de sections séparées (26, 36) desdits moyens transporteurs (5) dans des directions opposées et divergentes (F2) afin de déposer progressivement l'article (2) sur lesdits moyens transporteurs (5) lorsque lesdits moyens (8) de bras de support des éléments en peau sont abaissés.
